# EUROPÄISCHE PATENTSCHRIFT

(11) **EP 0 585 213 B1**
(45) Veröffentlichungstag und Bekanntmachung des Hinweises auf die Patenterteilung: **12.01.2000**
(21) Anmeldenummer: 93890150.1
(22) Anmeldetag: 03.08.1993
(51) Int. Cl.: B01J 2/20, B29B 9/00

(54) **Vorrichtung zur portionierten Abgabe von fliessfähigen Massen**
Device for the portion-wise release of fluid masses
Dispositif pour délivrer de manière dosée des masses fluides

(30) Priorität: 28.08.1992 AT 173092
(43) Veröffentlichungstag der Anmeldung: 02.03.1994
(73) Patentinhaber: BERNDORF BAND GesmbH, A-2560 Berndorf (AT)
(72) Erfinder: Harreither, Rupert, Dipl.-Ing., A-2500 Baden (AT)
(74) Vertreter: Widtmann, Georg, Dipl.-Ing. Dr. techn.

(56) Entgegenhaltungen:
- EP-A- 0 012 192
- EP-A- 0 145 839
- EP-A- 0 166 200
- EP-A- 0 477 164

## Beschreibung

Die Erfindung bezieht sich auf eine Vorrichtung zur portionierten Abgabe von fließfähigen Massen mit einem, insbesondere feststehenden, Masseverteiler, welcher im Querschnitt zumindest einen runden Außenbereich aufweist, an welchem ein endloser Mantel bewegbar ist.

Sowohl in der chemischen Industrie, Nahrungsmittelindustrie als auch anderen Industriezweigen besteht das Bedürfnis, fließfähige Massen mit unterschiedlicher Viskosität zu portionieren, und in der Regel werden diese Portionen sodann auch verfestigt. Bei thermoplastischen Substanzen genügt es durchaus derartige Flüssigkeitstropfen bzw. Portionen, z. B. auf einem unter der Vorrichtung angeordneten Transportband abzukühlen. In der Nahrungsmittelindustrie kann es durchaus erwünscht sein, diese Portionen anschließend, beispielsweise einer thermischen Behandlung, z.B. in einem Backofen, zu unterwerfen.

Es sind eine hohe Anzahl von Vorrichtungen zur portionsweisen Abgabe von fließfähigen Massen bekannt. Das Prinzip aller dieser Vorrichtungen besteht darin, daß die Massen in einen fließfähigen Zustand übergeführt oder gehalten werden und ein Flüssigkeitsstrom unterbrochen wird. Dieses Unterbrechen des Flüssigkeitsstromes kann nun beispielsweise gemäß US-A1 3,208,101 dadurch durchgeführt werden, daß ein diskontinuierlicher Flüssigkeitsstrom über eine Zahnradpumpe erreicht wird. Nach Auftrennung des Flüssigkeitsstromes in einzelnen Portionen werden diese Portionen auf einer unterhalb des Austrittes derselben vorbeibewegten Fläche oder auch einem anderen Transportmittel, wie beispielsweise Gasstrom, Flüssigkeitsbad u. dgl., aufgenommen.

Eine weitere Vorrichtung zur Portionierung von fließfähigen Massen wird in der US-A1 2,979.764 beschrieben. Dort wird in einem Behälter eine fließfähige Masse vorgelegt. Der im Querschnitt kreisförmige Behälter weist eine untere Stirnfläche auf, die mit einer hohen Anzahl von Bohrungen versehen ist. Im Inneren des Behälters rotiert ein Flügel, welcher abwechselnd die Öffnungen freigibt und verschließt, so daß in Abhängigkeit von der Viskosität der Flüssigkeit und der Rotationsgeschwindigkeit des Flügels die Menge der einzelnen abgegebenen Portionen festgelegt wird.

In der EP-B1 0 145 839 wird eine weitere Vorrichtung zur portionierten Abgabe von fließfähigen Massen beschrieben. Hiebei ist ein im Querschnitt kreisförmiger Behälter vorgesehen, um welchem eine weitere kreisförmige Trommel anliegend an der Außenfläche des Behälters drehbar ist. Dieser Behälter ist mit seiner Achse in etwa horizontal angeordnet und weist an seiner Unterseite eine Austrittsöffnung für die Massen auf. Diese Austrittsöffnung ist durch einen Austauschteil gebildet, welcher eine nutförmige Öffnung besitzt, die mit dem äußeren Zylinder kooperiert und welche ihrerseits über eine hohe Anzahl von in Reihe angeordneten Bohrungen von der Masse angespeist wird. Bei unterschiedlicher Viskosität oder auch Störungen kann der mit dem Zylinder kooperierende Teil ausgetauscht werden, beispielsweise auf Bohrungen mit geringerem Durchmesser oder auch einer Reinigung unterzogen werden.

Nachteilig bei den bekannten Vorrichtungen ist, daß eine Anpassung an die unterschiedliche Viskosität der zu verarbeitenden Massen nur mit erhöhtem Aufwand und hohen Stillstandszeiten der Vorrichtung erreicht werden kann. Weiters ist, wie bekannt, die Viskosität der Massen stark abhängig von der Temperatur derselben, wobei die Massen mit einer sehr genau vorgegebenen Temperatur in die Vorrichtung zur Portionierung eintreten können, hingegen eine Abkühlung teilweise nur schwer steuerbar in der Vorrichtung stattfindet. Die bislang bekannten Masseverteilungsvorrichtungen sind jedoch so ausgestaltet, daß hohe Wärmemengen aus geometrischen Gründen nur schwer eingebracht werden können. Eine zu hohe Temperatur, beispielsweise von Wärmeträgermedien, muß jedoch vermieden werden, da, wie bekannt, in der Regel die zu portionierenden Massen eine schlechte Wärmeleitfähigkeit aufweisen, wodurch einerseits ein hoher Temperaturgradient in fließendem Strom der Massen in der Portioniereinrichtung bedingt wird und andererseits auch dadurch unmittelbar an den Wärmeübergangsflächen Zersetzungen des zu portionierenden Mediums eintreten können.

Aus der EP-0 012 192-A1, von welchem Stand der Technik die vorliegende Erfindung ausgeht, wird eine Vorrichtung zur portionierten Abgabe von fließfähigen Massen mit einem feststehenden Masseverteiler bekannt. Der Masseverteiler weist einen äußeren zylindrischen Mantel auf, um welchen ein weiterer zylindrischer Mantel mit einer Vielzahl von durchgehenden Öffnungen zum Durchtritt der Massen bewegbar ist. Der feststehende Zylinder, der Masseverteiler, ist mit einem Verteiler für die zu portionierenden Massen verbunden. Eine Durchmischung der Massen zur Egalisierung von Temperatur und Viskosität findet bei einer derartigen Vorrichtung lediglich im untergeordneten Maße statt.

Die vorliegende Erfindung hat sich zur Aufgabe gesetzt, eine Vorrichtung zu schaffen, welche die oben angeführten Nachteile vermeidet und eine apparativ und verfahrensmäßig einfach zu handhabende Vorrichtung zu schaffen, bei welcher Medien mit unterschiedlichster Viskosität verarbeitet werden können und auch die Menge der einzelnen Portionen einfach festgelegt werden kann.

Die erfindungsgemäße Vorrichtung zur portionierten Abgabe von fließfähigen Massen mit einem, insbesondere feststehenden, Masseverteiler, welcher im Querschnitt zumindest einen runden Außenbereich aufweist, an welchem ein endloser Mantel, gegebenenfalls mit kreisrundem Querschnitt und im wesentlichen waagrechter Achse, mit einer Vielzahl von durchgehenden Öffnungen zum Durchtritt der Massen bewegbar ist, wobei der Masseverteiler mit einem mit der Masse angespeisten Verteiler verbunden ist, über welche nach unten über die Öffnungen im Mantel auf eine Transporteinrichtung, insbesondere endloses Stahlband, die Massen in Portionen ablegbar sind, besteht im wesentlichen darin, daß der Verteiler als Verteilerkanal ausgebildet ist und sich quer zur Bewegungsrichtung, vorzugsweise parallel zur Erzeugenden, des Mantels erstreckt und über zumindest eine Zuführung mit einer nach außen offenen Ausnehmung, die sich quer zur Bewegungsrichtung des Mantels im runden Außenbereich erstreckt, verbunden ist, wobei entlang und im Verteilerkanal eine Verteilerleitung angeordnet ist, welche einen Austritt für die Massen in den Verteilerkanal aufweist, welcher fern zur Zuführung zur Ausnehmung angeordnet ist, wodurch eine Strömung der Massen quer zur Verteilerleitung bedingbar ist.

Durch den Masseverteiler, an welchem ein Mantel mit durchgehenden Bohrungen vorbeiführbar ist, kann auf besonders einfache Art und Weise ein Massestrom unterbrochen werden. Hierbei ist es von Vorteil, wenn die Vorrichtung im wesentlichen horizontal angeordnet ist, da dann keine Anpassung an die unterschiedlichen Wege der Massen bis zu ihrer Ablagerung auf der Transporteinrichtung getroffen sein muß. Mit der Verteilerleitung im Verteilerkanal wird ermöglicht, daß der Verteilerkanal, welcher in der Regel Teil des Masseverteiler ist, also beispielsweise eine zylindrische Ausfräsung in Längsrichtung desselben darstellt, entlang seiner Längsrichtung gleichmäßig mit Masse angespeist werden kann. Der Austritt für die Massen ist hierbei fern zur Zuführung zur Ausnehmung, so daß eine Strömung quer zur Längserstreckung der Verteilerleitung erfolgt, wodurch vermieden wird, daß die Masse unmittelbar von der Verteilerleitung in die Zuführung gelangt, so daß durch die Querströmungen Druckausgleiche erfolgen können.

Weist der Verteilerkanal einen im wesentlichen gleichbleibenden Querschnitt auf, ist sowohl der fertigungstechnischen Seite als auch dem Strömungswiderstand einfach Rechnung getragen, da die Dimensionierung des Verteilerkanals in der Regel so gewählt werden kann, daß keine großen Druckunterschiede in demselben auftreten.

Ist die Zuführung mit einer Vielzahl von Bohrungen mit der nach außen offenen Ausnehmung verbunden, so kann dadurch eine weitere Aufteilung des Massestrom es erreicht werden, womit eine Egalisierung der Temperatur und Viskosität, beispielsweise durch entsprechende Ausbildung der Bohrungen erreicht werden kann.

Wird der Austritt in der Verteilerleitung mit einer Vielzahl von Öffnungen, insbesondere von Bohrungen, gebildet, so besteht der Vorteil, daß die Verteilerleitung selbst bei hohen Drücken der in dieselbe zugeleitete Masse unabhängig vom Druck bis zu bestimmten Strömungsbedingungen gleichmäßig in den Verteilerkanal entleeren kann.

Weist die Verteilerleitung in ihrem Inneren einen abnehmenden Strömungsquerschnitt vom Eintritt der Masse in die Verteilerleitung beginnend auf, so kann den Anforderungen des Massetransportes innerhalb der Verteilerleitung und auch den unterschiedlichen Druckverhältnissen je nach Viskosität der zu portionierenden Masse besonders einfach Rechnung getragen werden, so daß eine gleichmäßige Druckverteilung der Masse im Verteilerkanal selbst bei schwierig zu verarbeitenden Massen gewährleistet ist.

Weist die Verteilerleitung eine längs derselben verlaufende, vorzugsweise lotrecht orientierte, Nut auf, so kann eine besonders einfache Optimierung der Strömung innerhalb der Verteilerleitung erreicht werden, wobei gleichzeitig eine besonders einfache mechanische Fertigung gewährleistet ist. Diese Nut kann beispielsweise einen stetig verkleinernden Querschitt durch eine Keilfläche aufweisen, so daß der Querschnitt den Mengen der ausströmenden Massen angepaßt ist.

Weist die Nut einen Einsatz auf, welcher seinerseits einen etwa lotrecht orientierten Steg mit insbesondere einer Vielzahl von Querstegen besitzt, welcher einen vom Eintritt der Massen sich verengenden Strömungsquerschnitt bedingt, welche vorzugsweise zur Strömungsrichtung geneigte Kanäle, die in Öffnungen des Austrittes münden, bilden, so ist eine Ausführungsform geschaffen, die besonders für niederviskose Massen geeignet ist. Gleichzeitig wird eine weitere Möglichkeit zur Anpassung an die unterschiedlichen Strömungsbedingungen geschaffen, die besonders einfach zum Einsatz gebracht werden kann.

Ist der Strömungswiderstand im Verteilerkanal normal zur Verteilerleitung zur Zuführung beidseitig derselben im wesentlichen gleich, so werden die Zuführungen von beiden Seiten mit identen Massenströmen versehen, womit die in dieselben eintretenden Massenströme auch gleiche Temperaturen aufweisen können, so daß nicht durch unterschiedliche Viskosität und auch Anfangsgeschwindigkeiten der Masse in den Zuführungen unerwünschte Überlagerungen in den Massenströmen stattfinden können. Sind im Raum zwischen Verteilerkanal und Verteilerleitung, insbesondere parallel zur Verteilerleitung, verlaufende Strömungsschikanen angeordnet, so können einzelne Kammern gebildet werden, die einen Druckausgleich der strömenden Massen quer zur Verteilerrichtung erlauben.

Ist die Verteilerleitung im Verteilerkanal mittig angeordnet, so können besonders symmetrische Strömungsbedingungen im Verteilerkanal geschaffen werden, wobei gleichzeitig idente Temperaturverteilungen und Wärmeübergänge erhalten werden können.

Sind die Strömungsschikanen mit der Verteilerleitung verbunden, insbesondere einstückig ausgebildet, so kann ein besonders einfacher Austausch der Strömungsschikanen gemeinsam mit der Verteilerleitung durchgeführt werden, wobei mit einer einstückigen Ausbildung auch anschließende Reinigungsarbeiten durch Vermeidung von unerwünschten Spalten, besonders einfach durchgeführt werden können.

Ist die Verteilerleitung durch ein Rohr, insbesondere mit einer kreisrunden Innen- und Außenkontur, mit identem Kreismittelpunkt gebildet, so kann dasselbe besonders einfach gefertigt werden, wobei beispielsweise durch Variation der Wandstärke des Rohres erwünschte Unterschiede im Strömungsquerschnitt besonders einfach und genau eingestellt werden können.

Liegen die Strömungsschikanen an der Innenwandung des Verteilerkanales an und weisen eine Vielzahl von Durchtrittsöffnungen, insbesondere Durchtrittskanäle, die von der Innenwandung des Verteilerkanales begrenzt sind, auf, so kann durch diese Öffnungen bzw. Kanäle eine Festlegung des Druckes und der Strömungen besonders einfach erfolgen, wobei eine Vielzahl der Anpassungsmöglichkeiten gegeben ist.

Sind die Strömungsschikanen mit im Querschnitt teilrunden, insbesondere teilkreisrunden, parallel zueinander verlaufenden weiteren Ausnehmungen gebildet, so können diese besonders einfach und daher auch genau gefertigt werden, wobei gleichzeitig besonders vorteilhafte Strömungsbedingungen ohne nur wenig durchströmte Bereiche zu erhalten, bedingt sind.

Ist der Austritt in der Verteilerleitung, insbesondere lotrecht, oberhalb der Zuführung angeordnet, so ist dem im wesentlichen senkrecht nach unten erfolgenden Austritt der einzelnen Masseportionen strömungsmäßig besonders einfach Rechnung getragen.

Ist in der Ausnehmung des Masseverteilers zumindest ein Dichtelement gegenüber dem Mantel angeordnet, so muß die Abdichtung nicht entlang der gesamten Rundung erfolgen, sondern die Abdichtung muß lediglich entlang des Dichtelementes erfolgen, so daß ein höherer Anpreßdruck zwischen Dichtelement und Mantel und damit eine höhere Dichtleistung erreicht werden kann.

Liegt das/die Dichtelement(e) entlang einer rundgekrümmten, insbesondere teilzylindrischen, Fläche am Mantel an, so kann dadurch bei der Abdichtung geringste Verformungsarbeit am Mantel oder gegebenenfalls ein gänzlicher Wegfall von Verformungskräften am Mantel bei gleichzeitiger hoher Abdichtung erreicht werden.

Ist zumindest das in Bewegungsrichtung des Mantels gesehene erste Dichtelement in der Ausnehmung durch eine Dichtleiste gebildet, welches vorzugsweise lotrecht, angeordnet ist, so ist einerseits ein Dichtelement gegeben, das besonders einfach hergestellt werden kann und das beispielsweise dem Austritt der Massen entlang einer Erzeugenden des Mantels besonders einfach Rechnung trägt. Durch die lotrechte Anordnung des bzw. der Dichtleisten, also beidseits der Zuführung der Massen, wird auch durch die Dichtleisten eine Orientierung der Massen in Fließrichtung bedingt, insbesondere wenn durch einen Teil der Dichtleisten ebenfalls eine seitliche Begrenzung für den Strömungsraum der Massen gegeben ist.

Ist die Zuführung beidseitig, bezogen auf die Bewegungsrichtung des Mantels, von Dichtelementen gegen den Mantel abgedichtet, so sind besonders hohe Standzeiten des Massenverteilers gewährleistet, wobei gleichzeitig durch einfaches Austauschen der Dichtelemente immer eine besonders gute Abdichtung gegenüber dem Mantel erreichbar ist.

Ist zumindest ein Dichtelement, sind insbesondere zwei Dichtelemente, gegen den Mantel federnd gehalten, so kann einerseits die Abnützung an der Innenfläche des Mantels besonders gering gehalten werden, und es ist weiters gewährleistet, daß bei unterschiedlichen Krümmungen des Mantels im Innenbereich, unabhängig von der Ausbildung der Rundung des inneren Massezuteilers, eine Abdichtung voll gewährleistet ist.

Weist die Ausnehmung einen in seiner Breite veränderlichen Austrittsspalt für die Masse gegenüber dem Mantel auf, so besteht eine weitere Möglichkeit, die Menge der auf die Transporteinrichtung zu positionierenden Massen zu regeln. Man muß lediglich eine Verkleinerung des Spaltes durchführen, wenn eine geringere Massemenge abgelagert werden soll und umgekehrt eine Vergrößerung des Spaltes durchführen. Diese zusätzliche Variationsmöglichkeit ist besonders von Bedeutung, da hier die Menge der portionierenden Masse in weiten Bereichen auch bei unterschiedlichsten Viskositäten gesteuert werden kann.

Ist zumindest ein Dichtelement als Federblatt ausgebildet, welches etwa tangential zum runden Bereich des Masseverteilers angeordnet ist, so kann dadurch der im Masseverteiler benötigte Raum für die Dichtelemente besonders gering gehalten werden, so daß beispielsweise zusätzliche Heizmittel, wie Heizkanäle oder andere Zusatzeinrichtungen im Masseverteiler besonders einfach vorgesehen werden können.

Ist durch ein Dichtelement die aus der Zuführung austretende Masse entlang einer quer zu den Zuführungen verlaufenden Fläche des Dichtelementes vor ihrem Austritt durch den Mantel umlenkbar, so können etwa unbeabsichtigte bevorzugte Strömungswege vermieden werden, so daß beispielsweise Zuführungen, welche die vorbeibewegenden Öffnungen im Mantel decken würden, nicht zum bevorzugten Abgeben von Massen führen.

Sind die Dichtelemente mit einem weicheren Material als das des Mantels aufgebaut, so ist sichergestellt, daß der Verschleiß am Dichtelement und nicht an der Innenfläche des Mantels, welche besonders schwer bearbeitbar ist, auftritt. Dies ist insbesondere dann von Bedeutung, wenn nicht sichergestellt werden kann, daß Verunreinigungen in der aufzuteilenden Masse, wie Sandkörner u. dgl., vermieden werden, womit entsprechende Riefen nicht am Mantel, sondern bevorzugt auf den Dichtelementen auftreten.

Weist der Masseverteiler in Bewegungsrichtung des Mantels gesehen vor und nach der Ausnehmung lösbar befestigte Gleitschuhe auf, welche mit dem Mantel kooperieren, so kann die Materialpaarung Mantel und Gleitschuh gewählt werden, und es ist nicht erforderlich, daß der Masseverteiler in seinem Werkstoff an den Mantel angepaßt wird, so kann beispielsweise die erwünschte Wärmeleitfähigkeit, Bearbeitbarkeit u. dgl. bei der Materialwahl des Masseverteilers voll berücksichtigt werden, ohne auf die Materialpaarung Mantel und Masseverteilung Rücksicht zu nehmen.

Weist die Verteilerleitung eine eigene Temperiereinrichtung, insbesondere Heizung, auf, so kann eine besonders genaue Temperatursteuerung der zu portionierenden Massen durchgeführt werden, wobei gleichzeitig zu starke Temperaturbelastungen vermieden werden können.

Ist die Ausnehmung in ihrer Längsrichtung durch mit den Dichtelementen kooperierenden Endstücken begrenzt, so ist eine besonders gute Abdichtung des Masseverteilers gegenüber dem Mantel gewährleistet. So können die Dichtelemente und Endstücke zumindest miteinander verbunden sein. Weiters besteht die Möglichkeit, die Endstücke federnd gegen den Mantel zu halten.

Im folgenden wird die Erfindung anhand der Zeichnungen näher erläutert.

Es zeigen:
Fig. 1 eine Vorrichtung zum Portionieren mit zylindrischem Masseverteiler, zylindrischem Mantel und endlosem Stahlband in perspektivischer Darstellung,
Fig. 2 in schematischer Darstellung einen teilzylindrischen Masseverteiler mit einem endlosen Band als Mantel,
Fig. 3 im Querschnitt einen zylindrischen Masseverteiler mit zylindrischem Mantel im Schnitt,
Fig. 4 einen weiteren Quersschnitt durch einen zylindrischen Masseverteiler mit zylindrischem Mantel, wobei eine Verteilerleitung teilweise perspektivisch dargestellt ist und
Fig. 5 eine spezielle Ausbildung von Dichtelementen im Schnitt.

In den Fig. 6 und 7 ist eine erfindungsgemäße Vorrichtung mit einer Nut im Masseverteiler verkürzt und im Längsschnitt dargestellt, wohingegen in Fig. 8 der Querschnitt gemäß VIII / VIII von Fig. 7 dargestellt ist.

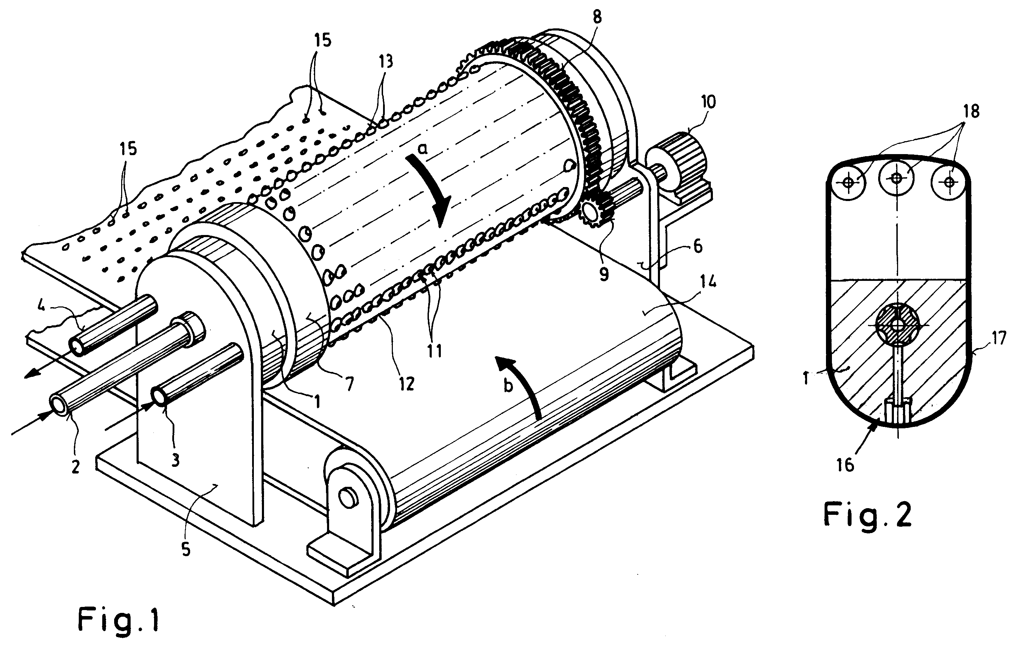

Die in Fig. 1 dargestellte Vorrichtung zur portionierten Abgabe von fließfähigen Massen weist einen feststehenden zylindrischen Masseverteiler 1 auf, dessen Massezufuhr durch die Rohrleitung 2 erfolgt. Diese Rohrleitung mündet in die in Fig. 1 nicht dargestellte Verteiler leitung. Weiters ist eine Temperierung des Masseverteilers durch ein umlaufendes Heizöl vorgesehen, das über die Rohrleitung 3 in den Masseverteiler ein- und über die Rohrleitung 4 austritt. Der Masseverteiler 1 ist feststehend und an seinen beiden Stirnseiten in einer Halterung 5, 6 befestigt. Der Masseverteiler ist derartig angeordnet, daß seine Achse horizontal angeordnet ist. Um den zylindrischen Masseverteiler 1 ist ein zylindrischer Mantel 7 bewegbar. An einem Stirnbereich weist der Mantel 7 einen Zahnkranz 8 auf, welcher über ein Zahnrad 9 und Elektromotor 10 in Richtung des Pfeiles a gedreht werden kann. Der Mantel weist eine Vielzahl von Öffnungen 11 auf, die entlang von Erzeugenden 12 des Mantels verlaufen, wobei jede Öffnung in einen Kegelstumpf 13 mündet. Durch diesen Kegel- bzw. Pyramidenstumpf od. dgl. wird einerseits erreicht, daß nachtropfende Massen an einer größeren Fläche des Mantels verteilt werden können und anderseits daß, zum Unterschied bei einem dünnwandigen Mantel, größere Masseportionen in der Umlaufgeschwindigkeit des Zylinders transportiert werden können, so daß höhere Durchsatzmengen bei der Ablagerung der Massen ohne Fadenbildung od. dgl. auf der darunter angeordneten Transporteinrichtung, in diesem Fall auf das endlose Stahlband 14, erreicht werden können. Das Stahlband 14 bewegt sich in Richtung des Pfeiles b, wobei die Geschwindigkeiten, u. zw. Umlaufgeschwindigkeit der Spitzen des Kegelstumpfes und Umlaufgeschwindigkeit des Bandes, je nach erwünschter Form der Masseportionen 15, die am Stahlband abgelagert werden können, regulierbar sind. Soll beispielsweise eine längliche Form der Masseportionen am Stahlband bedingt sein, so muß ein Unterschied in den beiden Geschwindigkeiten vorliegen, so daß entweder ein Voreilen oder ein Nacheilen der fließfähigen Massen am Stahlband ermöglicht wird. Je nachdem, ob die auf das Stahlband abgelagerten fließfähigen Massen tixotrop, thermoplastisch oder in der Wärme erhärtend sind, kann mit einer Kühlvorrichtung, z. B. durch unter dem Band angeordnete Sprühdüsen oder auch Heizeinrichtung, z. B. durch IR-Strahler, die oberhalb des Bandes angeordnet sind, eine Nachbehandlung erfolgen.

Der Fluß des Materials ist nun derart, daß dasselbe über die Rohrleitung 2 in den Masseverteiler gelangt und dort entweder entlang eines in Richtung der Erzeugenden 12 des Mantels verlaufenden Schlitz oder in einer Vielzahl von Bohrungen, die ebenfalls entlang einer Erzeugenden verlaufen können, über die Öffnungen 11 im Mantel 7 austritt. Die Unterbrechung des Massestromes erfolgt dadurch, daß unterhalb der Öffnungen des Masseverteilers ein geschlossener Bereich des Mantels tritt.

Wie in Fig. 2 dargestellt, ist es nicht erforderlich, daß der Masseverteiler und der Mantel eine vollzylindrische Form aufweist, sondern es ist ausreichend, wenn der Masseverteiler 1 einen runden Bereich 16 aufweist, um welchen ein weiterer endloser Mantel 17 bewegt werden kann, das im oberen Bereich durch drei Rollen 18 angetrieben und umgelenkt wird. Der weitere endlose Mantel 17 weist nicht dargestellte Öffnungen auf, durch welche die in den Masseverteiler eingeführte Masse portioniert austreten kann.

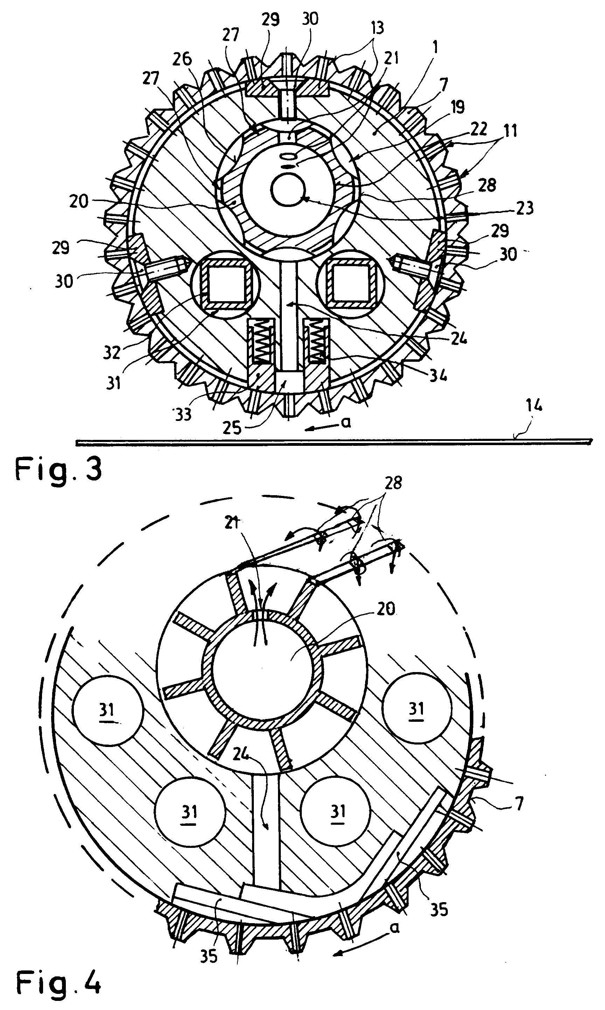

In Fig. 3 ist der Masseverteiler 1 mit dem zylindrischen Mantel 7 im Querschnitt dargestellt. Wie aus Fig. 1 besonders deutlich ersichtlich, befindet sich unterhalb desselben das Stahlband 14. Der Mantel 7 weist Kegelstümpfe 13 auf, in welchen Bohrungen 11 münden. Der Masseverteiler weist einen Verteilerkanal 19 auf, in welchem eine Verteilerleitung 20 angeordnet ist. Diese Verteilerleitung ist, wie aus Fig. 1 ersichtlich, über die Rohrleitung 2 mit einem nicht dargestellten Massebehälter verbunden. Die Masse gelangt mit Vordruck in den Masseverteiler, wobei der Vordruck von der Viskosität der Massen mitbestimmt wird. Der Austritt der Massen aus der Verteilerleitung 20 erfolgt durch eine Vielzahl von Öffnungen 21 aus dem Inneren der Verteilerleitung, die einen kontinuierlich abnehmenden Strömungsquerschnitt, u. zw. von der durch den äußeren Kreis 22 und den inneren Kreis 23, umschriebenen Kreisfläche wiedergegeben ist. Die Öffnungen 21 befinden sich lotrecht oberhalb der Zuführungen 24, die den Verteilerkanal 19 mit der Ausnehmung 25 verbinden. Die Zuführungen 24 werden durch eine hohe Anzahl von Bohrungen gebildet, die einen größeren Strömungsquerschnitt aufweisen können und die parallel zur Erzeugenden 12 des Mantels angeordnet sind. Die Verteilerleitung 20 wird durch ein Rohr gebildet, das im Verteilerkanal 19 mit einem fast identen kreisförmigen Querschnitt angeordnet ist. Das Lumen nimmt im Strömungsquerschnitt kontinuierlich ab, wohingegen der Außendurchmesser konstant ist. Die Wandung ist durch sechs teilkreisrunde, parallel zueinander verlaufende Ausnehmungen 26 abgefräst, wodurch Schikanen 27 gebildet sind. Die Schikanen weisen im Abstand zueinander Ausnehmungen auf, wodurch Durchtrittskanäle 28 gebildet sind, die anderseits von der Innenwandung des Verteilerkanales 19 begrenzt sind. Die Durchtrittskanäle 28 sind, wie besonders deutlich Fig. 4 entnehmbar, entlang des Verteilerkanales angeordnet. Die Strömung der Masse erfolgt hiebei vom Inneren der Verteilerleitung 20 über Öffnungen 21 in die weiteren Ausnehmungen 26. In den weiteren Ausnehmungen 26 erfolgt jeweils ein Druckausgleich, so daß die Massen von einer Ausnehmung zur anderen Ausnehmung mit einem im wesentlichen identen Druck und damit identer Geschwindigkeit austreten können. Die Strömung der Massen erfolgt im Inneren der Verteilerleitung entlang der Verteilerleitung und auch quer hiezu, u. zw. durch die Durchtrittskanäle 28. Besonders vorteilhalft ist es hiebei, wenn diese Querströmungen durch die Durchtrittskanäle 28 und Ausnehmungen 26 ident sind, da dadurch eine gleichmäßige Anströmung der Zuführungen 24 erfolgt.

Der Masseverteiler 1 weist auch Gleitschuhe 29 aus Bronze, die gegenüber Stahl, aus welchem der Außenmantel gebildet ist, einen geringeren Reibungswiderstand besitzen und über Schrauben 30 mit dem Masseverteiler verbunden sind.

Im Masseverteiler 1 sind weiters benachbart zu den Zuführungen 24 Wärmeleitkanäle 31 vorgesehen, in welchen Wärmeleitmedien geführt werden. Zum Unterschied zu der in Fig. 1 dargestellten Ausführungsform wird das Wärmeleitmedium im Wärmeleitkanal 31 zu- und abgeführt, wobei im Inneren desselben ein, insbesondere volumsgleiches, Rohr 32 geführt ist, in welchem je nachdem, ob eine Erwärmung des Mediums oder eine Kühlung des Mediums das Wärmeleitmedium abgeführt oder zugeführt wird.

In der Ausnehmung 25 sind zwei Dichtelemente, u. zw. Dichtleisten 33 aus Bronze, angeordnet, die über Federn 34 gegen den Mantel 7 gehalten sind.

Bei der in Fig. 4 dargestellten Ausführungsform sind die Dichtelemente durch Federblätter 35 gebildet, die gegen den Mantel 7 federnd gehalten sind. Durch diese Ausgestaltung ist ein besonders großer konstruktiv verfügbarer Raum im Massezuteiler ermöglicht, so daß nicht nur zwei, sondern eine höhere Anzahl von Wärmeleitkanälen 31 vorgesehen sein können. Wie aus Fig. 4 weiters ersichtlich, können auch die Zuführungen 24 nicht nur direkt lotrecht unterhalb derselben auf eine Transporteinrichtung entleeren, sondern auch bereits davor den Austritt der fließfähigen Massen ermöglichen.

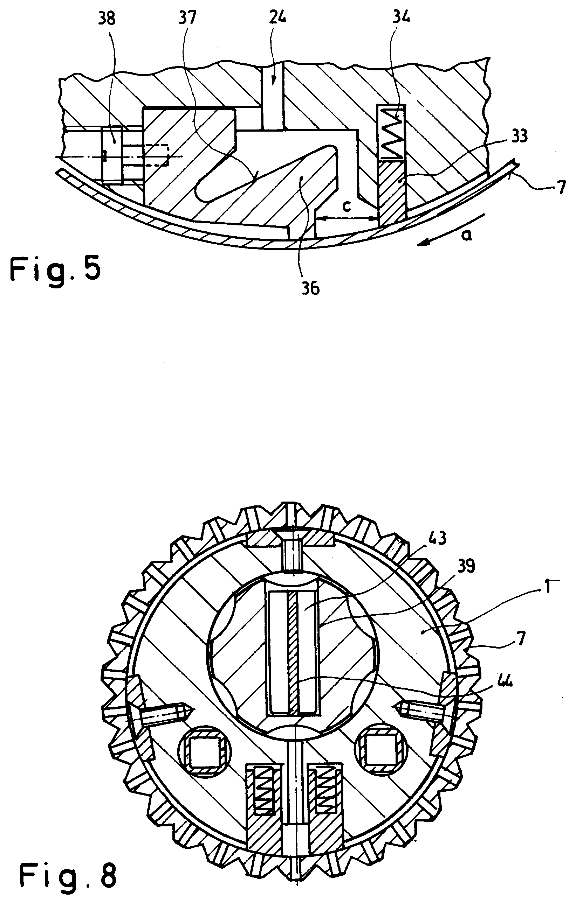

Wie aus Fig. 5 ersichtlich, kann eines der Dichtelemente 36 eine Fläche 37 aufweisen, die quer zu den Zuführungen 24 verläuft, so daß eine Umlenkung der austretenden Masse erfolgt. Durch die Stellschraube 38 ist die Breite des Austrittsspaltes c verstellbar, so daß die Zeitspanne, in welcher eine Austrittsöffnung des Mantels von der austretenden Masse gespeist wird, einstellbar ist.

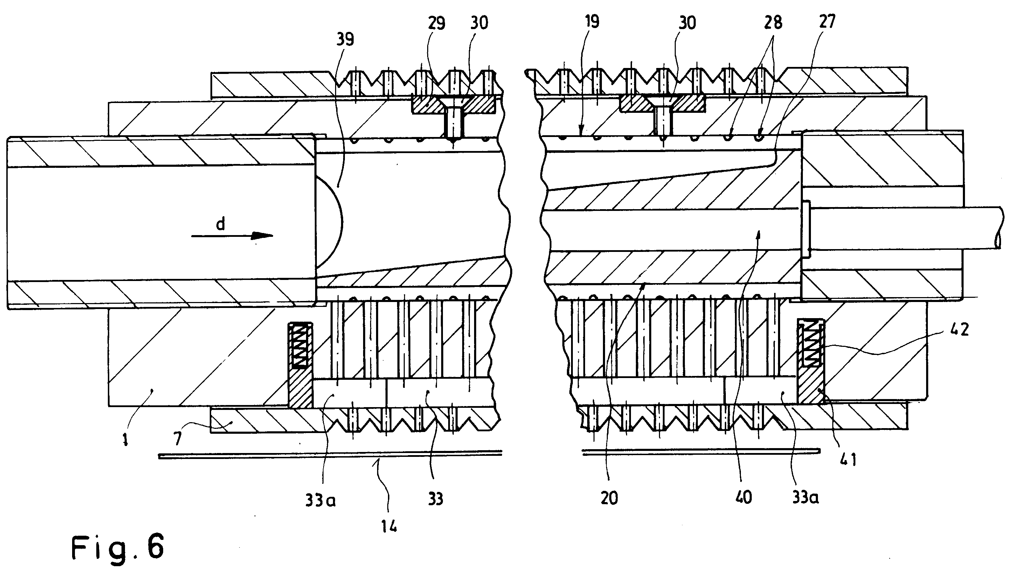

Bei dem in Fig. 6 im Längsschnitt dargestellten Mantel 7 samt Masseverteiler 1 ist ersichtlich, daß die mit Schrauben 30 befestigten Gleitschuhe (29) auch am Scheitel des Masseverteilers angeordnet sind, wobei die Anzahl abhängig von der Breite des Masseverteilers ist. Im Masseverteiler, u. zw. im Verteilerkanal 19 ist eine Verteilerleitung 20 mit einer Nut 39 angeordnet. Diese Nut 39 ist lotrecht angeordnet und nimmt in Richtung d des Massetransportes entsprechend des abnehmenden Volumens, das aus der Leitung austritt, ab. Zusätzlich ist in der Verteilerleitung eine eigene Heizung 40 vorgesehen. Die Dichtleisten 33 kooperieren in ihrem Endbereich 33a mit Endstücken 41, durch welche die Ausnehmung 25 beidseitig begrenzt ist. Die Endstücke 41 werden über Federn 42 gegen den Mantel 7 gehalten. Wie dieser Fig. deutlich zu entnehmen, ist die Dichtleiste 33 in seiner Längsrichtung dreigeteilt, wobei der jeweilige Endbereich 33a mit den Endstücken 41 kooperiert, insbesondere einstückig ausgebildet ist, so daß ein im Querschnitt U-förmiger Teil vorliegt, der mit einer U-förmigen Fläche am Mantel 7 anliegt.

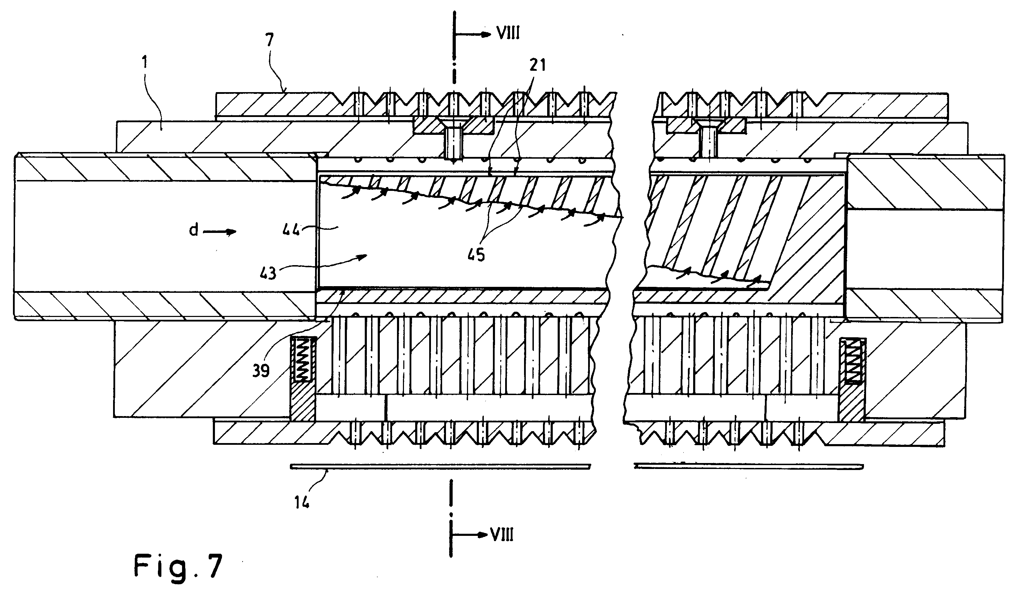

Bei der in den Fig. 7 und 8 dargestellten Ausführungsform ist die Nut 39 ebenfalls lotrecht orientiert und weist einen gleichbleibenden rechteckigen Querschnitt auf. In dieser Nut ist ein Einsatz 43 vorgesehen, welcher einen Steg 44 aufweist, der ebenfalls lotrecht orientiert ist und Querstege 45 besitzt. Wie aus Fig. 7 deutlich ersichtlich, nimmt der freie Strömungsquerschnitt des Schlitzes in Strömungsrichtung d der Masse ab. Der Austritt aus der Verteilerleitung wird durch eine Vielzahl von Öffnungen gebildet, in welchen Kanäle, gebildet mit den Querstegen 45, münden, die zur Strömungsrichtung geneigt ausgebildet sind.

## Patentansprüche

1. Vorrichtung zur portionierten Abgabe von fließfähigen Massen mit einem, insbesondere feststehenden, Masseverteiler (1), welcher im Querschnitt zumindest einen runden Außenbereich (16) aufweist, an welchem ein endloser Mantel (7, 17), gegebenenfalls mit kreisrundem Querschnitt und im wesentlichen waagrechter Achse, mit einer Vielzahl von durchgehenden Öffnungen (11) zum Durchtritt der Massen bewegbar ist, wobei der Masseverteiler ( 1 ) mit einem mit der Masse angespeisten Verteiler verbunden ist, über welche nach unten über die Öffnungen (11) im Mantel (7, 17) auf eine Transporteinrichtung, insbesondere endloses Stahlband (14), die Massen in Portionen (15) ablegbar sind, *dadurch gekennzeichnet*, daß der Verteiler als Verteilerkanal (19) ausgebildet ist und sich quer zur Bewegungsrichtung (a), vorzugsweise parallel zur Erzeugenden (12), des Mantels (7, 17) erstreckt und über zumindest eine Zuführung (24) mit einer nach außen offenen Ausnehmung (25), die sich quer zur Bewegungsrichtung (a) des Mantels im runden Außenbereich (16) erstreckt, verbunden ist, wobei entlang und im Verteilerkanal (19) eine Verteilerleitung (20) angeordnet ist, welche einen Austritt für die Massen in den Verteilerkanal (19) aufweist, welcher fern zur Zuführung (24) zur Ausnehmung (25) angeordnet ist, wodurch eine Strömung der Massen quer zur Verteilerleitung (20) bedingbar ist.

2. Vorrichtung nach Anspruch 1, dadurch gekennzeichnet, daß der Verteilerkanal einen im wesentlichen gleichbleibenden Querschnitt aufweist.

3. Vorrichtung nach Anspruch 1 oder 2, dadurch gekennzeichnet, daß die Zuführung (24) mit einer Vielzahl von Bohrungen mit der nach außen offenen Ausnehmung (25) verbunden ist.

4. Vorrichtung nach Anspruch 1, 2 oder 3, dadurch gekennzeichnet, daß der Austritt aus der Verteilerleitung (20) mit einer Vielzahl von Öffnungen (21), insbesondere von Bohrungen, gebildet ist.

5. Vorrichtung nach einem der Ansprüche 1 bis 4, dadurch gekennzeichnet, daß die Verteilerleitung (26) in ihrem Inneren einen abnehmenden Strömungsquerschnitt (22, 26), vom Eintritt der Masse in die Verteilerleitung beginnend, aufweist.

6. Vorrichtung nach einem der Ansprüche 1 bis 5, dadurch gekennzeichnet, daß die Verteilerleitung (20) eine längs derselben verlaufende, vorzugsweise lotrecht orientierte, Nut (39) aufweist.

7. Vorrichtung nach Anspruch 6, dadurch gekennzeichnet, daß in der Nut (39) ein Einsatz (43) vorgesehen ist, welcher seinerseits einen lotrecht orientierten Steg (44), mit insbesondere einer Vielzahl, von Querstegen (45) besitzt, welcher einen vom Eintritt der Masse sich verengenden Strömungsquerschnitt bedingt.

8. Vorrichtung nach einem der Ansprüche 1 bis 7, dadurch gekennzeichnet, daß der Strömungswiderstand im Verteilerkanal (19) normal zur Verteilerleitung (20) zur Zuführung (24) beidseits derselben im wesentlichen gleich ist.

9. Vorrichtung nach einem der Ansprüche 1 bis 8, dadurch gekennzeichnet, daß im Raum zwischen Verteilerkanal (19) und Verteilerleitung (20), insbesondere parallel zur Verteilerleitung (20) verlaufende, Strömungsschikanen (27) angeordnet sind.

10. Vorrichtung nach einem der Ansprüche 1 bis 9, dadurch gekennzeichnet, daß die Verteilerleitung (20) im Verteilerkanal (19) mittig angeordnet ist.

11. Vorrichtung nach einem der Ansprüche 1 bis 10, dadurch gekennzeichnet, daß die Strömungsschikanen (27) mit der Verteilerleitung (20) verbunden, insbesondere einstückig, ausgebildet sind.

12. Vorrichtung nach einem der Ansprüche 1 bis 11, dadurch gekennzeichnet, daß die Verteilerleitung (20) durch ein Rohr, insbesondere mit einer kreisrunden Innen- und Außenkontur, mit identem Kreismittelpunkt gebildet ist.

13. Vorrichtung nach einem der Ansprüche 1 bis 12, dadurch gekennzeichnet, daß die Strömungsschikanen (27) an der Innenwandung des Verteilerkanales (19) anliegen und eine Vielzahl von Durchtrittsöffnungen, insbesondere Durchtrittskanälen (28), die von der Innenwandung des Verteilerkanales (19) begrenzt sind, aufweisen.

14. Vorrichtung nach einem der Ansprüche 1 bis 13 dadurch gekennzeichnet, daß die Strömungsschikanen (27) mit im Querschnitt teilrunden, insbesondere teilkreisrunden, parallel zueinander verlaufenden, weiteren Ausnehmungen (26) gebildet sind.

15. Vorrichtung nach einem der Ansprüche 1 bis 14 dadurch gekennzeichnet, daß der Austritt (21) in die Verteilerleitung (20), insbesondere lotrecht, oberhalb der Zuführung (24) angeordnet ist.

16. Vorrichtung nach einem der Ansprüche 1 bis 15, dadurch gekennzeichnet, daß in der Ausnehmung (25) des Masseverteilers zumindest ein Dichtelement (33, 35, 36) gegenüber dem Mantel (7, 17) angeordnet ist.

17. Vorrichtung nach Anspruch 1 bis 16 dadurch gekennzeichnet, daß das/die Dichtelement(e) (33, 35, 36) entlang einer rundgekrümmten, insbesondere teilzylindrischen, Fläche am Mantel (7, 17) anliegen.

18. Vorrichtung nach Anspruch 16 oder 17, dadurch gekennzeichnet, daß zumindest das in Bewegungsrichtung (a) des Mantels (7, 17) gesehen erste Dichtelement (33) in der Ausnehmung (25) durch, vorzugsweise lotrecht angeordnete, Dichtleiste(n) (33) gebildet ist/sind.

19. Vorrichtung nach einem der Ansprüche 16, 17 oder 18, dadurch gekennzeichnet, daß die Zuführung (24) beidseitig, bezogen auf die Rewegungsrichtung (a) des Mantels (7, 17), von Dichtelementen (33, 35, 36) gegen den Mantel (7, 17) abgedichtet ist.

20. Vorrichtung nach einem der Ansprüche 16 bis 19, dadurch gekennzeichnet, daß zumindest ein, insbesondere zwei, Dichtelemente(e) (33, 35) gegen den Mantel federnd gehalten ist/sind.

21. Vorrichtung nach einem der Ansprüche 1 bis 20, dadurch gekennzeichnet, daß die Ausnehmungen (25) einen in seiner Breite veränderlichen Austrittsspalt (c) für die Masse gegenüber dem Mantel (7) aufweist.

22. Vorrichtung nach einem der Ansprüche 16 bis 21, dadurch gekennzeichnet, daß zumindest ein Dichtelement als Federblatt (35) ausgebildet ist, welches etwa tangential zum runden Bereich des Masseverteilers (1) angeordnet ist.

23. Vorrichtung nach einem der Ansprüche 16 bis 22, dadurch gekennzeichnet, daß durch ein Dichtelement (36) die aus der Zuführung (24) austretende Masse entlang einer quer zu den Zuführungen verlaufenden Fläche (37) des Dichtelementes (36) vor ihrem Austritt durch den Mantel (7) umlenkbar ist.

24. Vorrichtung nach einem der Ansprüche 16 bis 23, dadurch gekennzeichnet, daß die Dichtelemente mit einem weicheren Material als das des Mantels aufgebaut sind.

25. Vorrichtung nach einem der Ansprüche 16 bis 24, dadurch gekennzeichnet, daß die Ausnehmung (25) in ihrer Längsrichtung durch ein oder mehrere mit zumindest einem Dichtelement (33, 35, 36) kooperierende(s) Endstück(e) (41) begrenzt ist.

26. Vorrichtung nach einem der Ansprüche 1 bis 25, dadurch gekennzeichnet, daß der Masseverteiler in Bewegungsrichtung des Mantels gesehen vor und nach der Ausnehmung (25) lösbar befestigte Gleitschuhe (29) aufweist, welche mit dem Mantel kooperieren.

27. Vorrichtung nach einem der Ansprüche 1 bis 26, dadurch gekennzeichnet, daß die Verteilerleitung (20) eine eigene Temperiereinrichtung, insbesondere Heizung (40), aufweist.

## Claims

1. Device for portioned delivery of fluid substances with an, in particular fixed, substance distributor (1) which in cross-section exhibits at least one round outer area (16) on which an endless casing (7, 17), possibly having a circular cross-section and essentially horizontal axis, with a plurality of openings (11) passing through for passage of the substances, can be moved, the substance distributor (1) being connected with a distributor fed with the substance, through which the substances can be delivered in portions (15) downwards through the openings (11) in the casing (7, 17) on to a conveying device, in particular an endless steel belt (14), characterised in that the distributor is embodied as a distributor conduit (19) and extends transversely to the direction of movement (a), preferably parallel to the generatrix (12), of the casing (7, 17) and being connected by means of at least one feed (24) with a recess (25) which is open towards the outside and extends transversely to the direction of movement (a) of the casing in the round outer area (16), a distributor line (20) being disposed along and in the distributor conduit (19), which line exhibits an outlet for the substances into the distributor conduit (19), which is disposed far from the feed (24) to the recess (25), through which the substances can be made to flow transversely to the distributor line (20).

2. Device according to claim 1, characterised in that the distributor conduit exhibits an essentially constant cross-section.

3. Device according to claim 1 or 2, characterised in that the feed (24) is connected with a plurality of bores with the recess (25) open towards the outside.

4. Device according to claim 1, 2 or 3, characterised in that the outlet from the distributor line (20) is formed with a plurality of openings (21), in particular bores.

5. Device according to one of claims 1 to 4, characterised in that in its interior the distributor line (20) exhibits a decreasing flow cross-section (22, 26), beginning from the inlet for the substance into the distributor line.

6. Device according to one of claims 1 to 5, characterised in that the distributor line (20) exhibits a groove (39) running along the same and preferably aligned perpendicularly.

7. Device according to claim 6, characterised in that an insert (43) is provided in the groove (39), which insert for its part has a perpendicularly aligned rib (44), with in particular a plurality of transverse ribs (45), which produces a flow cross-section narrowing from the inlet for the substance.

8. Device according to one of claims 1 to 7, characterised in that the flow resistance in the distributor conduit (19) at right angles to the distributor line (20) to the feed (24) is essentially the same on both sides thereof.

9. Device according to one of claims 1 to 8, characterised in that flow baffles (27) are disposed in the space between the distributor conduit (19) and the distributor line (20), in particular running parallel to the distributor line (20).

10. Device according to one of claims 1 to 9, characterised in that the distributor line (20) is disposed centrally in the distributor conduit (19).

11. Device according to one of claims 1 to 10, characterised in that the flow baffles (27) are formed connected to the distributor line (20), in particular in one piece.

12. Device according to one of claims 1 to 11, characterised in that the distributor line (20) is formed by a pipe, in particular with a circular inner and outer contour, with an identical circle centre.

13. Device according to one of claims 1 to 12, characterised in that the flow baffles (27) bear on the inner wall of the distributor conduit (19) and exhibit a plurality of passage openings, in particular passage channels (28) which are bounded by the inner wall of the distributor conduit (19).

14. Device according to one of claims 1 to 13, characterised in that the flow baffles (27) are formed with in cross-section partly round, in particular partly circular further recesses (26) running parallel to one another.

15. Device according to one of claims 1 to 14, characterised in that the outlet (21) into the distributor line (20) is disposed, in particular perpendicularly, above the feed (24).

16. Device according to one of claims 1 to 15, characterised in that at least one sealing element (33, 35, 36) relative to the casing (7, 17) is disposed in the recess (25) of the substance distributor.

17. Device according to claims 1 to 16, characterised in that the sealing element or elements (33, 35, 36) bear along a curved, in particular partly cylindrical, surface on the casing (7, 17).

18. Device according to claim 16 or 17, characterised in that at least the first sealing element (33) in the recess (25) viewed in the direction of movement (a) of the casing (7, 17) is formed by sealing strips (33) preferably disposed perpendicularly.

19. Device according to one of claims 16, 17 or 18, characterised in that on both sides in relation to the direction of movement (a) of the casing (7, 17), the feed (24) is sealed relative to the casing (7, 17) by sealing elements (33, 35, 36).

20. Device according to one of claims 16 to 19, characterised in that at least one, in particular two, sealing elements (33, 35) are held resiliently against the casing.

21. Device according to one of claims 1 to 20, characterised in that the recess (25) exhibits an outlet gap (c) of variable width for the substance facing the casing (7).

22. Device according to one of claims 16 to 21, characterised in that at least one sealing element is embodied as a spring leaf (35) which is disposed roughly tangentially to the round area of the substance distributor (1).

23. Device according to one of claims 16 to 22, characterised in that the substance emerging from the feed (24) can be deflected by a sealing element (36) along a surface (37) of the sealing element (36) running transversely to the feeds before its emergence through the casing (7).

24. Device according to one of claims 16 to 23, characterised in that the sealing elements are constructed of a softer material than that of the casing.

25. Device according to one of claims 16 to 24, characterised in that in its longitudinal direction the recess (25) is bounded by one or more end pieces (41) co-operating with at least one sealing element (33, 35, 36).

26. Device according to one of claims 1 to 25, characterised in that in the direction of movement of the casing before and after the recess (25) the substance distributor exhibits detachable secured slide shoes (29) which co-operate with the casing.

27. Device according to one of claims 1 to 26, characterised in that the distributor line (20) exhibits its own tempering device, in particular heater (40).

## Revendications

1. Dispositif pour délivrer de manière dosée des masses fluides, comprenant un distributeur de masse (1) en particulier fixe, lequel présente en coupe transversale au moins une zone extérieure arrondie (16), sur laquelle peut se mouvoir une enveloppe sans fin (7, 17) ayant, le cas échéant, une section circulaire et un axe essentiellement horizontal, et munie d'une pluralité d'orifices (11) traversants pour le passage des masses, le distributeur de masse (1) étant relié à un distributeur alimenté par la masse, par l'intermédiaire duquel les masses peuvent être déposées en doses (15) vers le bas, via les orifices (11) dans l'enveloppe (7, 17), sur un dispositif de transport, en particulier un ruban d'acier (14) sans fin, caractérisé en ce que le distributeur est conçu à la manière d'un canal de distribution (19) et s'étend transversalment au sens de mouvement (a), de préférence parallèlement à la génératrice (12), de l'enveloppe (7, 17) et est relié, par l'intermédiaire d'au moins une alimentation (24), avec un creux (25) ouvert vers l'extérieur qui s'étend transversalment au sens de mouvement (a) de l'enveloppe dans la zone extérieure arrondie (16), une conduite de distribution (20) étant disposée le long et dans le canal de distribution (19), qui présente une sortie pour les masses menant dans le canal de distribution (19), lequel est disposé loin de l'alimentation (24) menant au creux (25), ce qui permet d'obtenir un écoulement des masses transversalment à la conduite de distribution (20).

2. Dispositif selon la revendication 1, caractérisé en ce que le canal de distribution présente une section essentiellement invariable.

3. Dispositif selon la revendication 1 ou 2, caractérisé en ce que l'alimentation (24) est reliée avec le creux (25) ouvert vers l'extérieur par une pluralité d'alésages.

4. Dispositif selon la revendication 1, 2 ou 3, caractérisé en ce que la sortie de la conduite de distribution (20) est formée par une pluralité d'orifices (21), en particulier d'alésages.

5. Dispositif selon l'une des revendications 1 à 4, caractérisé en ce que la conduite de distribution (20) présente en son intérieur une section d'écoulement diminuante (22, 26) depuis l'entrée de la masse dans la conduite de distribution.

6. Dispositif selon l'une des revendications 1 à 5, caractérisé en ce que la conduite de distribution (20) présente une rainure (39) s'étendant le long de celle-ci, orientée de préférence verticalement.

7. Dispositif selon la revendication 6, caractérisé en ce qu'un insert (43) est prévu dans la rainure (39), lequel possède de son côté une âme (44) orientée verticalement, avec en particulier une pluralité d'âmes transversales (45), laquelle conditionne une section d'écoulement rétrécissante depuis l'entrée de la masse.

8. Dispositif selon l'une des revendications 1 à 7, caractérisé en ce que la résistance à l'écoulement dans le canal de distribution (19), dans la direction normale par rapport à la conduite de distribution (20) menant à l'alimentation (24), est essentiellement identique des deux côtés de celle-ci.

9. Dispositif selon l'une des revendications 1 à 8, caractérisé en ce que des chicanes d'écoulement (27) sont disposées dans l'espace entre le canal de distribution (19) et la conduite de distribution (20), lesquelles s'étendent en particulier parallèlement à la conduite de distribution (20).

10. Dispositif selon l'une des revendications 1 à 9, caractérisé en ce que la conduite de distribution (20) est disposée au centre du canal de distribution (19).

11. Dispositif selon l'une des revendications 1 à 10, caractérisé en ce que les chicanes d'écoulement (27) sont reliées avec la conduite de distribution (20), en particulier en formant une seule pièce.

12. Dispositif selon l'une des revendications 1 à 11, caractérisé en ce que la conduite de distribution (20) est formée par un tube ayant en particulier un contour intérieur et extérieur circulaire, dont le centre de cercle est identique.

13. Dispositif selon l'une des revendications 1 à 12, caractérisé en ce que les chicanes d'écoulement (27) adhèrent à la paroi intérieure du canal de distribution (19) et présentent une pluralité d'orifices de passage, en particulier de canaux de passage (28), qui sont limités par la paroi intérieure du canal de distribution (19).

14. Dispositif selon l'une des revendications 1 à 13, caractérisé en ce que les chicanes d'écoulement (27) sont formées avec d'autres creux (26) de section partiellement arrondie, en particulier partiellement circulaire, s'étendant parallèlement les uns aux autres.

15. Dispositif selon l'une des revendications 1 à 14, caractérisé en ce que la sortie (21) menant dans la conduite de distribution (20) est disposée au-dessus de l'alimentation (24), en particulier verticalement.

16. Dispositif selon l'une des revendications 1 à 15, caractérisé en ce qu'au moins un élément d'étanchéité (33, 35, 36) par rapport à l'enveloppe (7, 17) est disposé dans le creux (25) du distributeur de masse.

17. Dispositif selon les revendications 1 à 16, caractérisé en ce que le/les élément(s) d'étanchéité (33, 35, 36) adhèrent à l'enveloppe (7, 17) le long d'une surface cintrée, en particulier partiellement cylindrique.

18. Dispositif selon la revendication 16 ou 17, caractérisé en ce qu'au moins le premier élément d'étanchéité (33) dans le creux (25), vu dans le sens de mouvement (a) de l'enveloppe (7, 17), est formé par une/des baguette(s) d'étanchéité (33) disposés(s) de préférence verticalement.

19. Dispositif selon l'une des revendications 16, 17 ou 18, caractérisé en ce que l'alimentation (24) est rendue étanche contre l'enveloppe (7, 17), des deux côtés par rapport au sens de mouvement (a) de l'enveloppe (7, 17), par des éléments d'étanchéité (33, 35, 36).

20. Dispositif selon l'une des revendications 16 à 19, caractérisé en ce qu'au moins un, en particulier deux éléments d'étanchéité (33, 35) sont maintenus de manière élastique contre l'enveloppe.

21. Dispositif selon l'une des revendications 1 à 20, caractérisé en ce que le creux (25) présente une fente de sortie (c) pour la masse, de largeur variable par rapport à l'enveloppe (7).

22. Dispositif selon l'une des revendications 16 à 21, caractérisé en ce qu'au moins un élément d'étanchéité est conçu à la manière d'une lame de ressort (35), laquelle est disposée sensiblement tangentiellement à la zone arrondie du distributeur de masse (1).

23. Dispositif selon l'une des revendications 16 à 22, caractérisé en ce que grâce à un élément d'étanchéité (36), la masse sortant de l'alimentation (24) peut être déviée le long d'une surface (37) de l'élément d'étanchéité (36), s'étendant transversalment aux alimentations, avant qu'elle ne sorte par l'enveloppe (7).

24. Dispositif selon l'une des revendications 16 à 23, caractérisé en ce que les éléments d'étanchéité sont constitués par une matière plus tendre que celle de l'enveloppe.

25. Dispositif selon l'une des revendications 16 à 24, caractérisé en ce que le creux (25) est limité dans le sens de sa longueur par une ou plusieurs pièces d'extrémité (41) coopérant avec au moins un élément d'étanchéité (33, 35, 36).

26. Dispositif selon l'une des revendications 1 à 25, caractérisé en ce que le distributeur de masse présente avant et après le creux (25), vu dans le sens de mouvement de l'enveloppe, des patins de guidage (29) fixés de manière amovible, lesquels coopèrent avec l'enveloppe.

27. Dispositif selon l'une des revendications 1 à 26, caractérisé en ce que la conduite de distribution (20) présente un propre dispositif d'équilibrage de température, en particulier un chauffage (40).
